Europäisches Patentamt

European Patent Office

Office européen des brevets

(19)

(11) **EP 1 209 607 A2**

(12) **EUROPEAN PATENT APPLICATION**

(43) Date of publication:
**29.05.2002 Bulletin 2002/22**

(51) Int Cl.⁷: **G06F 17/60**

(21) Application number: **01480040.3**

(22) Date of filing: **29.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.11.2000 EP 00480108**

(71) Applicant: **INTERNATIONAL BUSINESS MACHINES CORPORATION**
**Armonk, NY 10504 (US)**

(72) Inventor: **Bauchot, Frederic**
**06640 Saint Jeannet (FR)**

(74) Representative: **Etorre, Yves Nicolas**
**Compagnie IBM France,**
**Département Propriété Intellectuelle**
**06610 La Gaude (FR)**

(54) **Method and system for filling a range of cells in an electronic spreadsheet by samples**

(57) The present invention is directed to a method for filing empty cells of a range of cells on the base of sample values contained in a sub set of said range of cells, in a multi dimensional spreadsheet comprising a plurality of cells identified by a cell address along each dimension, a range of cells comprising one or a plurality of cells. The method comprises the steps of:

- selecting a range of cells, the range of cells comprising a plurality of cells, the plurality of cells comprising a plurality of sample cells and one or a plurality of empty cells, a sample cell containing a sample value, an empty cell containing no value or a value not considered as a sample value; the content $y_i$ of each sample cell and each empty cell being associated with a particular value $x_i$ of a variable x;
- activating a fill-by-sample operation, said fill-by-sample operation comprising the step of:

  - ordering the sample cells and the empty cells according to the values $x_i$ associated with the content of these cells;

and for each empty cell, the steps of:

  - identifying the value $x_i$ associated with the content of the empty cell;
  - selecting one or a plurality of previous sample cells;
  - selecting one or a plurality of next sample cells;
  - computing the value $y_i$ of the empty cell according to the values $y_{previous}$ contained in the selected one or plurality of previous sample cells, and the values $y_{next}$ contained in the selected one or plurality of next sample cells;
- filing the empty cell with the computed value $y_i$.

Fig. 4

**Description**

*Technical field of the invention*

The present invention relates to the field of information processing by digital computers, and more particularly to a method and system, in an electronic spreadsheet, for filling a range of cells on the base of sample values found within this same range of cells, with the option to turn this operation as persistent.

*Background art*

Before computers, numerical analyses, particularly financial ones, were usually prepared on an accountant's columnar pad or spreadsheet, with pencil and calculator in hand. By organising data into columns and rows, spreadsheets afford the rapid assimilation of information by a reader. The task of preparing a spreadsheet on paper, however, is not quite so fast. Instead, the process tends to be very slow, as each entry must be tediously calculated and entered into the spreadsheet. Since all calculations are the responsibility of the preparer, manually prepared spreadsheets are also prone to errors. Hence, preparation of spreadsheets by hand is slow, tedious, and unreliable.

With the advent of microcomputers, a solution was forthcoming in the form of "electronic spreadsheets." Better known simply as "spreadsheets," these software programs provide a computerised replacement for the traditional financial modelling tools: the accountant's columnar pad, pencil, and calculator. In some regards, spreadsheet programs are to those tools what word processors are to typewriters. Spreadsheets offer dramatic improvements in ease of creating, editing, and using financial models.

A typical spreadsheet program configures the memory of a computer to resemble the column/row or grid format of an accountant's columnar pad, thus providing a visible calculator for a user. Because this "pad" exists dynamically in the computer's memory, however, it differs from paper pads in several important ways. Locations in the electronic spreadsheet, for example, must be communicated to the computer in a format which it can understand. A common scheme for accomplishing this is to assign a number to each row in a spreadsheet, a letter to each column, and another letter to each sheet (or page) of the spreadsheet. To reference a location at column A and row 1 of the second page (i.e., the upper-left hand corner), for example, the user types in "B:A1". In this manner, the spreadsheet defines an addressable storage location or "cell" at each intersection of a row with a column within a given page.

Data entry into an electronic spreadsheet occurs in much the same manner that information would be entered on an accountant's pad. After a screen cursor is positioned at a desired location, the user can enter alphanumeric information. Besides holding text and numeric information, however, spreadsheet cells can store special instructions or "formulas" specifying calculations to be performed on the numbers stored in spreadsheet cells. Such spreadsheet cells can also be defined and named as a range as long as they are arranged as a connex set of cells. A typical example of such a named range simply corresponds to a regular table found in an accountant's pad. In this fashion, range names can serve as variables in an equation, thereby allowing precise mathematical relationships to be defined between cells. The structure and operation of a spreadsheet program, including advanced functions such as functions and macros, are documented in the technical, trade, and patent literature.

Electronic spreadsheets offer many advantages over their paper counterparts. For one, electronic spreadsheets are much larger (i.e., hold more information) than their paper counterparts; electronic spreadsheets having thousands or even millions of cells are not uncommon. Spreadsheet programs also allow users to perform "what-if" scenarios. After a set of computational relationships has been entered into a worksheet, thanks to imbedded formulas for instance, the spread of information can be recalculated using different sets of assumptions, with the results of each recalculation appearing almost instantaneously. Performing this operation manually, with paper and pencil, would require recalculating every relationship in the model with each change made. Thus, electronic spreadsheet systems were invented to solve "what-if' problems, that is, changing an input and seeing what happens to an output.

Cell ranges are used to automate computations in spreadsheets. Whether cells or cell ranges are named or not, they can be referenced within a formula either by a "relative" or an "absolute" reference. Such a reference can be the address of the referenced cell range, or the name of the referenced cell range if it turns that this cell range is named. It is common to find in electronic spreadsheet based applications some 2D or 3D tables which are defined as ranges of cells and which record the values of a function of the form $y=f(x)$, or $z=f(x, y)$. Without loosing any generality, the rest of our description will assume a 2D table with associated relationships of the form $y=f(x)$. The values taken by such functions can either follow a theoretical model or represent some experimental measures. In the former case, the cell will typically be filled with a formula representing the theoretical relationship between the input variable (the **x** parameter) and the ouput variable (the **y** parameter). In the later case some cells within the range of cells will contain values corresponding to samples obtained by experimentation, whereas the remaining cells within the range are left empty. Keeping such void cells is generally a problem because these cells, if used as parameters within formulas or functions, lead to ERR cells. It is thus desirable to fill these empty cells with some values. Conventional spreadsheet tools offer some means for that, but with some severe limitations as outlined hereafter. When a range of cells is selected, conventional electronic spreadsheet applications (like Excell from Microsoft Corporation or like 1-2-3 from Lotus Corporation) allow to fill the range in different ways, according to options and parameters that can be specified in menus, sub-menus or dialog boxes.

- The conventionnal range filling means assume that the values within the selected range of cells follow either a linear or exponential law. This may address some specific spreadsheet user needs, but it is generally very constraining to try to approximate any function with only a linear or exponential law.
- When the filling function is not explicitly specified by the user, the conventional range filling means determine it on the base of the two first cells found in the selected range. If these two first cells do not hold values, then the range filling operation has no effect on the selected range. If these two first cells do hold values, then the range filling operation will update the content of all the other cells of the range, even if they previously contained some information. Thus some information may be inadvertently lost.
- When a range of cells has been already filled, for instance on the base of the two first cells, any change in the value of one of these two first cells do not affect the values taken by all the other cells within the range of cells. This lack of dynamicity necessitates to re-run the range filling operation on the same range of cells.
- The conventionnal range filling means generally assume that the values found in the cells of the range correspond to the transformation of an arithmetic sequence of values. In other words, the i-th cell of the range is equal to f(i) where f is either a linear or exponential function: $f(i) = a * i + b$ or $f(i) = a * b^i$. It is not possible to specify a sequence $\{x_i\}$ such that the i-th cell of the range is equal to $f(x_i)$.

From the previous points, it is clear that the range filling means available in conventionnal electronic spreadsheet presents severe limitations which may easilly result in false calculation or loss of information. The present invention offers a powerful and efficient solution to this problem by defining a method and a system for filling a range of cells on the base of a sub-set of "sample" values, with the possibility to persistently and automatically reacting upon sample value change or upon sample value introduction or upon sample value deletion.

*Summary of the invention*

The present invention relates to the field of information processing by digital computers, and more particularly to a method and system for persistently filling a range of cells on the base of a sub-set of "sample" values, in a multi dimensional spreadsheet.
The present invention is directed to a method for filing empty cells of a range of cells on the base of sample values contained in a sub set of said range of cells, in a multi dimensional spreadsheet comprising a plurality of cells identified by a cell address along each dimension, a range of cells comprising one or a plurality of cells. The method as defined in independent claim 1 comprises the steps of:

- selecting a range of cells, the range of cells comprising a plurality of cells, the plurality of cells comprising a plurality of sample cells and one or a plurality of empty cells, a sample cell containing a sample value, an empty cell containing no value or a value not considered as a sample value; the content $y_i$ of each sample cell and each empty cell being associated with a particular value $x_i$ of a variable x;
- activating a fill-by-sample operation, said fill-by-sample operation comprising the step of:

  - ordering the sample cells and the empty cells according to the values $x_i$ associated with the content of these cells;
    and for each empty cell, the steps of:

  - identifying the value $x_i$ associated with the content of the empty cell;
  - selecting one or a plurality of previous sample cells;
  - selecting one or a plurality of next sample cells;
  - computing the value $y_i$ of the empty cell according to the values $y_{previous}$ contained in the selected one or plurality of previous sample cells, and the values $y_{next}$ contained in the selected one or plurality of next sample cells;
  - filing the empty cell with the computed value $y_i$.

Further embodiments of the invention are provided in the appended dependent claims.

## Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :

- Figure **1A** is a schematic view of a computer system in which the present invention may be embodied.

- Figure **1B** is a schematic view a software system including an operating system, an application software, and a user interface for carrying out the present invention.

- Figure **1C** illustrates the basic architecture and functionality of a graphical user interface in which the present invention may be embodied.

- Figure **2A** shows a spreadsheet notebook interface according to the preferred embodiment of the present invention.

- Figure **2B** shows the toolbar component of the notebook interface shown in Figure **2A**.

- Figures **2C** and **2D** show page identifiers for rapidly accessing and manipulating individual pages of the notebook interface shown in Figure **2A.**

- Figure **3A, 3B, 3C** uses a specific example to compare the effect of a conventional range filling operation with the effect of a fill-by-sample operation, according to the preferred embodiment of the present invention.

- Figure **4** illustrates the structure of a persistent fill-by-sample table, according to the preferred embodiment of the present invention.

- Figures **5A, 5B, 5C** illustrate a preferred spreadsheet user interface for invoking the persistent fill-by-sample operation, according to the present invention.

- Figure **6** is a flow chart illustrating a preferred method for performing, upon a spreadsheet user request, a (potentially persistent) fill-by-sample operation on a range on cells, according to the present invention.

- Figure **7** is a flow chart illustrating a preferred method for automatically performing a persistent_fill-by-sample operation on a range of cells, upon detection of the change of the content of a cell within this range of cells.

## *Detailed description of the preferred embodiment*

## SYSTEM HARDWARE

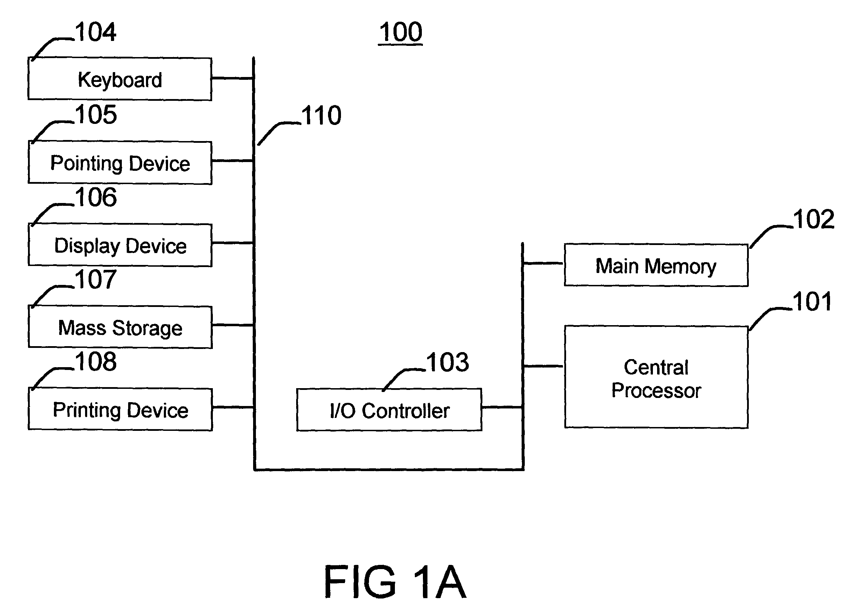

As shown in FIG. **1A,** the present invention may be embodied on a computer system **100** comprising a central processor **101,** a main memory **102,** an input/output controller **103,** a keyboard **104,** a pointing device **105** (e.g., mouse, track ball, pen device, or the like), a display device **106,** and a mass storage **107** (e.g., hard disk). Additional input/ output devices, such as a printing device **108,** may be included in the system **100** as desired. As illustrated, the various components of the system **100** communicate through a system bus **110** or similar architecture. In a preferred embodiment, the computer system **100** includes an IBM-compatible personal computer, which is available from several vendors (including International Business Machine - IBM Corporation of Armonk, N.Y.).

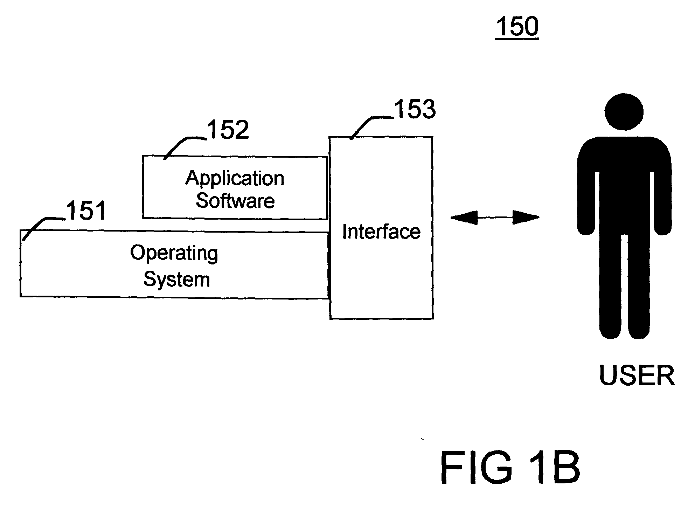

Illustrated in FIG. **1B,** a computer software system **150** is provided for directing the operation of the computer system **100.** Software system **150,** which is stored in system memory **102** and on disk memory **107,** includes a kernel or operating system **151** and a shell or interface **153.** One or more application programs, such as application software **152,** may be "loaded' (i.e., transferred from storage **107** into memory **102)** for execution by the system **100.** The system **100** receives user commands and data through user interface **153;** these inputs may then be acted upon by the system **100** in accordance with instructions from operating module **151** and/or application module **152.** The interface **153,** which is preferably a graphical user interface (GUI), also serves to display results, whereupon the user may supply additional inputs or terminate the session. In a preferred embodiment, operating system **151** and interface **153** are Microsoft Win95, available from Microsoft Corporation of Redmond, Wash. Application module **152,** on the other hand, includes a spreadsheet notebook of the present invention as described in further detail herein below.

## INTERFACE

### A. Introduction

The following description will focus on the presently preferred embodiments of the present invention, which are embodied in spreadsheet applications operative in the Microsoft Win95 environment. The present invention, however, is not limited to any particular application or any particular environment. Instead, those skilled in the art will find that the system and methods of the present invention may be advantageously applied to a variety of system and application software, including database management systems, word processors, and the like. Moreover, the present invention may be embodied on a variety of different platforms, including Macintosh, UNIX, NextStep, and the like. Therefore, the description of the exemplary embodiments which follows is for purposes of illustration and not limitation.

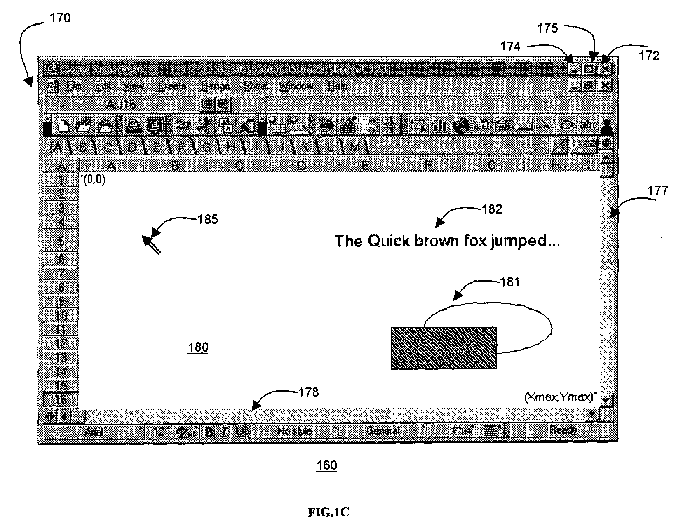

Referring now to FIG. **1C,** the system **100** includes a windowing interface or workspace **160**. Window **160** is a rectangular, graphical user interface (GUI) for display on screen **106;** additional windowing elements may be displayed in various sizes and formats (e.g., tiled or cascaded), as desired. At the top of window **160** is a menu bar **170** with a plurality of user-command choices, each of which may invoke additional submenus and software tools for use with application objects. Window **160** includes a client area **180** for displaying and manipulating screen objects, such as graphic object **181** and text object **182.** In essence, the client area is a workspace or viewport for the user to interact with data objects which reside within the computer system **100.**

Windowing interface **160** includes a screen cursor or pointer **185** for selecting and otherwise invoking screen objects of interest. In response to user movement signals from the pointing device **105,** the cursor **185** floats (i.e., freely moves) across the screen **106** to a desired screen location. During or after cursor movement, the user may generate user-event signals (e.g., mouse button "clicks" and "drags") for selecting and manipulating objects, as is known in the art. For example, Window **160** may be closed, re-sized, or scrolled by "clicking" (selecting) screen components **172, 174/5,** and **177/8,** respectively.

In a preferred embodiment, screen cursor **185** is controlled with a mouse device. Single-button, double-button, or triple-button mouse devices are available from a variety of vendors, including Apple Computer of Cupertino, Calif., Microsoft Corporation of Redmond, Wash., and Logitech Corporation of Fremont, Calif., respectively. More preferably, screen cursor control device **105** is a two-button mouse device, including both right and left "mouse buttons."

Programming techniques and operations for mouse devices are well documented in the programming and hardware literature; see e.g., *Microsoft Mouse Programmer's Reference,* Microsoft Press, 1989. The general construction and operation of a GUI event-driven system, such as Windows, is also known in the art: see, e.g., Petzold, C., *Programming Windows,* Second Edition, Microsoft Press, 1990. The disclosures of each are hereby incorporated by reference.

### B. Preferred interface

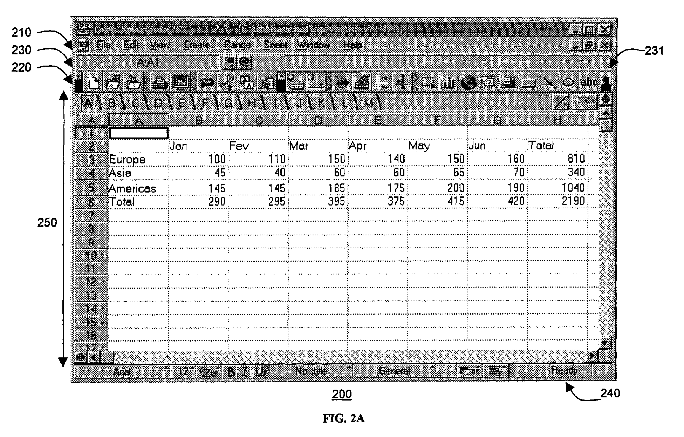

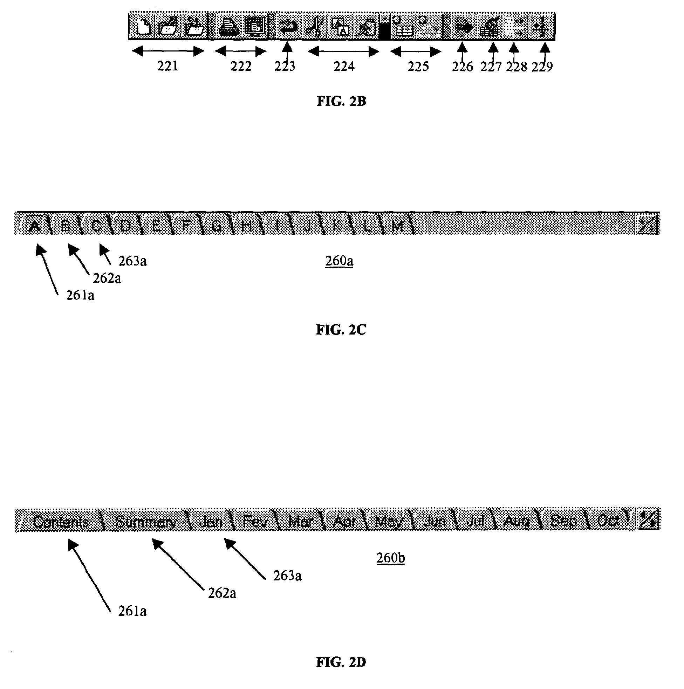

Shown in FIG. 2**A,** a spreadsheet notebook interface of the present invention will now be described The spreadsheet notebook or workbook of the present invention includes a notebook workspace **200** for receiving, processing, and presenting information, including alphanumeric as well as graphic information. Notebook workspace **200** includes a menu bar **210,** a toolbar **220,** a current cell indicator **230,** an input line **231,** a status line **240,** and a notebook window **250.** The menu bar **210** displays and invokes, in response to user inputs, a main level of user commands. Menu **210** also invokes additional pull down menus, as is known in windowing applications. Input line **231** accepts user commands and information for the entry and editing of cell contents, which may include data, formulas, macros, and the like. Indicator **230** displays an address for the current cursor (i.e., active cell) position, or the address or name of a selected named range (i.e. active selection). At the status line **240,** system **100** displays information about the current state of the workbook; for example, a "READY" indicator means that the system is ready for the user to select another task to be performed.

The toolbar **220,** shown in further detail in FIG. 2**B,** comprises a row or palette of tools which provide a quick way for the user to choose commonly-used menu commands or properties. In an exemplary embodiment, toolbar **220** includes file manipulation buttons **221,** printing buttons **222,** an undo button **223,** cut, copy, and paste buttons **224,** information pop-up window buttons tool **225,** a named range selection button **226,** a style copy button **227,** a column re-sizing button **228,** and a sum button **229.** The functions of these buttons are suggested by their names. For instance, buttons **224** cut, copy and paste data and objects to and from Windows' clipboard. The same actions are also available as corresponding commands in the Edit menu (available from menu bar **210).**

The notebook, which provides an interface for entering and displaying information of interest, includes a plurality of spreadsheet pages. Each page may include conventional windowing features and operations, such as moving, re-sizing, and deleting. In a preferred embodiment, the notebook includes 256 spreadsheet pages, all of which are saved as a single disk file on the mass storage **107.** Workspace **200** may display one or more notebooks, each sized and positioned (e.g., tiled, overlapping, and the like) according to user-specified constraints.

Each spreadsheet page of a notebook includes a 2-D spread. Page A from the notebook **200,** for example, includes a grid in row and column format, such as row 3 and column F. At each row/column intersection, a box or cell (e.g., cell **C4)** is provided for entering, processing, and displaying information in a conventional manner. Each cell is addressable, with a selector being provided for indicating a currently active one (i.e., the cell that is currently selected).

As shown in FIGS. **2C-D,** individual notebook pages are identified by page identifiers **260,** preferably located along one edge of a notebook. In a preferred embodiment, each page identifier is in the form of a tab member (e.g., members **261a, 262a, 263a)** situated along a top edge of the notebook. Each tab member may include representative indicia, such as textual or graphic labels, including user selected titles representing the contents of a corresponding page. In FIG. **2C,** the tab members **260** are set to their respective default names. For example, the first three tab members (members **261a, 262a, 263a**) are respectively set to A, B, and C. Tab members are typically given descriptive names provided by the user, however. As shown in FIG. **2D,** for example, the first three tab members have now been set to "Contents" (tab member **261b**), "Summary" (tab member **262b),** and "Jan" (tab member **263b).** In a similar manner, the remaining tabs are set to subsequent months of the year. In this manner, the user associates the page identifiers with familiar tabs from an ordinary paper notebook. Thus, the user already knows how to select a page or spread of interest: simply select the tab corresponding to the page (as one would do when selecting a page from a paper notebook).

In addition to aiding in the selection of an appropriate page of information, the user-customizable page identifiers serve aid in the entry of spreadsheet named range addresses. For example, when entering a formula referring to a named range of cells on another page, the user may simply use the descriptive page name in the named range address, thus making it easier for the user to understand the relationship of the cell(s) or information being referenced.

A general description of the features and operation of the spreadsheet notebook interface may be found in Quattro Pro for Windows (Getting *Started, User's Guide and Building Spreadsheet Applications),* available from Borland International.

## PERSISTENT FILL-BY-SAMPLE OPERATION

### A. Introduction

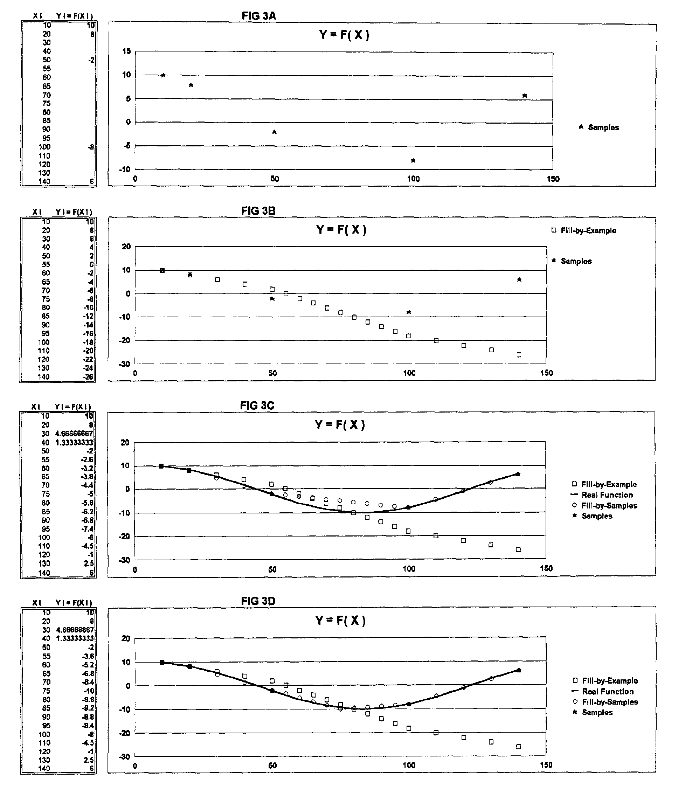

As the power of spreadsheet environments has increased since several years, it is today possible to develop complex custom applications solely based on spreadsheets, as opposed to applications developed with general purpose programming languages like C++ or VisualBasic from Microsoft Corporation. This can be achieved thanks to the spreadsheet imbedded tools such as ranges of cells, macro languages, script languages and formulas. In large spreadsheets, it is common to find structured tables where the content of some cells belonging to a sub-set of the structured table, is filled with information (the "values") derived from experimentation samples and where other cells not belonging to this same sub-set of the structured table (because the experimentation didn't provide the values), are either left empty or are filled with values derived from the sample values according to some underlying model. Such tables and associated experimentation samples can be defined in various fields, like in biology, or in physics, or in demography sciences, or in consumer behaviour or stock exchange modelisation. Referring to the FIG **3A,** the table delimited by double line borders corresponds to a range of cells with two columns. The left column holds some values $\{x_i\}$ and the right column holds some values $y_i = f(x_i)$, with only the top, second, fifth, fifteenth and last cells containing values derived from measurements. All the other cells within the left column are left empty as none measurement information is available to fill them. The plot on the right side of the range shows in a graphical way the available samples. By using conventional means for filling the rightmost column of the table (such as the "Fill by example" tool available with the Lotus Corporation 1-2-3 spreadsheet), the spreadsheet user gets a result as depicted in FIG **3B:** the two first cells of the column are kept unchanged and the other ones are evaluated as a linear extrapolation of the two first cells. Doing so, the existing samples (fifth, fifteenth and last cells) are overwritten, that is lost. The plot on the right side of the table shows the poor result of the range filling operation done with these conventional means. This single example is just an illustration of the fact that the means available in conventional electronic spreadsheets, can only properly fill a range of cells if the following conditions are met:

- The only available samples are the first two ones in the range of cells.
- The underlying function should be close enough to either an arithmetic or geometric law.
- The $\{x_i\}$ values, as introduced above, should be arranged as a geometric sequence.

Such conditions are difficult to meet, so that the conventional range filling operational means raise more difficulties than they solve. The present invention offers a user-friendly solution to this problem by defining a method and system allowing to persistently fill a range of cells on the base of some samples. With the same example as the one introduced above, the FIG **3C** shows how a preferred embodiment of the present invention fills the rightmost column of the range. The plot on the right side allows to compare the samples, the output of the conventional fill-by-example operation, the output of the fill-by-sample operation according to a preferred embodiment of the present invention, and the theoretical curve which was approximated by the samples. Furthermore the FIG **3D** shows how a preferred embodiment of the present invention reacts upon the introduction of a new sample. The conventional means such as the fill-by-example operation do not react to the introduction of a new sample; or to the modification of an existing sample or to the deletion of an existing sample. The present invention dynamically updates the filled values within the range of cells as soon as a sample value is either added, or changed, or deleted. In the example of FIG **3D,** a new sample (the middle cell in the table) is introduced: its measured value -10 supersedes the previous ones -4 which was obtained by the fill-by-sample operation. As a result, the values of the neighbour cells are updated to take into account the new sample.

**B. Improved Range-Fill Manager**

In contrast to just-described conventional tools, the present invention provides a more powerful, user-friendly and interactive approach for filling ranges of cells in a form of a Range-Fill Manager. The manager automatically allows the spreadsheet user to specify:

- if a selected range of cells must be filled according to a "fill-by-sample" mode of operation, and
- if this filling operation must maintain or not persistent effect, that is automatically react upon future changes in the selected range.

For more clarity, the ranges of cells which take advantage of the present invention will be called *"persistent sampled ranges of cells"* or for short *"PSROC".*

**C. Persistent sampled ranges of cells**

In a preferred embodiment, PSROC can be easily identified on the display device **106** within the work area **180** of the window **160** by using some specific cell attributes, such as a font style or font colour or background colour or border line style or border line colour or background pattern, etc... In a preferred embodiment, the background colour of a PSROC is set to a value referred to as PSROC_COLOUR. Furthermore to easily identify within a PSROC which cells contain samples and which cells contain values derived from sample, the sample cells are using a BOLD font whereas the other cells are using a normal font.

**D. Scenario**

In a preferred embodiment, the present invention can be used in two steps :

- The first step occurs when the spreadsheet user decides, based on some criteria not developed here, whether a given range of cells deserves to take advantage of the improved range-fill manager or not.

  - If it is the case, the spreadsheet user follows in sequence the following steps.

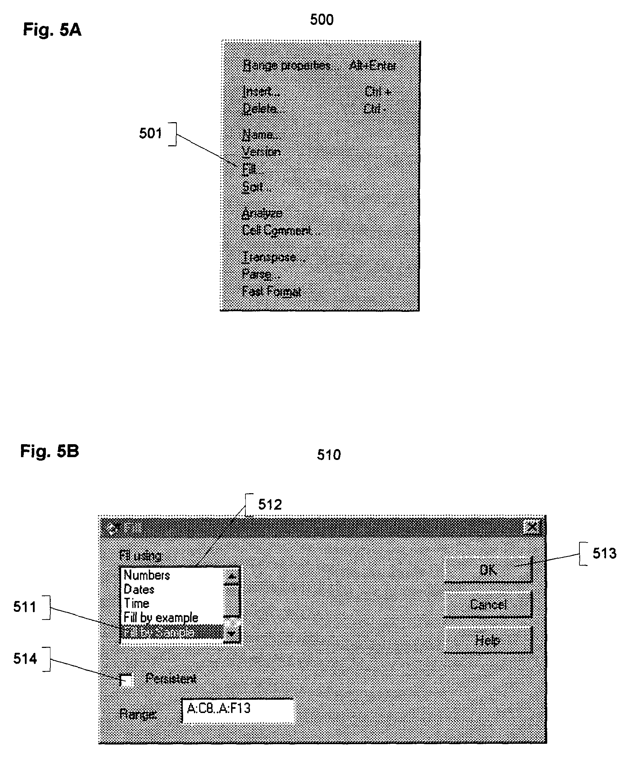

    - First the spreadsheet user selects the relevant range of cells by using conventional means such as (but not limited to) the pointing device **105** or the keyboard **104.** Without loosing any generality nor departing from the spirit of the invention, it is assumed that the selected range of cells is either constituted by a single column range of cells or by a double column range of cells. In the former case, this i-th cell within this range of cells corresponds to $y_i = f(i)$. In other words the range corresponds to the images by a function f of a list of equally spaced successive values: f(1), f(2), f(3), ..., f(N). In the later case, the i-th cell within the left column within the range of cells corresponds to a parameter $x_i$ and the i-th cell within the right column within the range of cells corresponds to $y_i = f(x_i)$. In other words, the right most column of the range corresponds to the images by a function f of a list of any values: $f(x_1)$, $f(x_2)$, $f(x_3)$, ..., $f(x_N)$.
    - Then the spreadsheet user invokes an extension of the regular range fill operation thanks to conventional means available in spreadsheet environment, such as (but not limited to) dedicated push-buttons, keyboard entry short cuts, menu or sub menu entries. This extension of the regular range-fill operation corresponds to a specific command called *"Fill-by-sample".* In a preferred embodiment of the present invention, this *Fill-by-sample* command is invoked by clicking with the pointing device **105** first on a menu entry **501** "Fill" within the conventional "Range" menu **500** of an electronic spreadsheet, as shown in FIG **5A,** then on a specific field "Fill by Sample" **511** within a "Fill using" list box **512** present within a specific new dialog box "Fill" **510** as shown in FIG **5B,** and then on the "OK" push-button **513** available within this same dialog box "Fill" **510.** Optionally the spreadsheet user can click with the pointing device **105** on the "Persistent" check box **514** within the dialog box "Fill" **510** to specify that the filling operation must keep a persistent effect. At completion of the *Fill-by-sample* command, the empty cells within the selected range of cells are automatically filled with values derived from the sample cells (the ones initially filled by the spreadsheet user). If the "Persistent" option is specified, then at completion of the *Fill-by-sample* command, the background colour of the selected range of cells is set to the value PSROC_COLOUR, reflecting that this range of cells is now a PSROC. If the "Persistent" option is not specified, and if the selected range was previously turned into a PSROC, then at completion of the *Fill-by-sample* command, the background colour of the selected PSROC is reset to the initial value, before being turned into a PSROC.

- Inversely, a conventional range-fill operation is performed after having selected a given range of cells.

- The second step occurs when the spreadsheet user updates a cell belonging to a PSROC:

  - If the spreadsheet user empties the content of a cell belonging to the PSROC, whether this cell was previously hosting or not a sample value, then the improved range-fill manager invokes by itself a specific command called *"Persistent_Fill-by-Sample"* which automatically reflects this update in all the cells belonging to the PSROC, by considering that the emptied cell does not or does not longer contain a sample. This *"Persistent_Fill-by-Sample"* operation is fully automated, without involvement of the spreadsheet user, and is itself based on a *Fill-by-sample* operation applied by the improved range-fill manager onto the PSROC.
  - If the spreadsheet user enters the content of a cell belonging to a PSROC, whether this cell was previously hosting or not a sample value, then the improved range-fill manager invokes by itself a specific command called *"Persistent_Fill-by-Sample"* which automatically reflects this update in all the cells belonging to the PSROC, by considering that the specified cell contains either a new sample or a sample update. This *"Persistent_Fill-by-Sample"* operation is fully automated, without involvement of the spreadsheet user, and is itself based on a *Fill-by-sample* operation applied by the improved range-fill manager onto the PSROC.

### E. Persistent Fill-by-sample Table

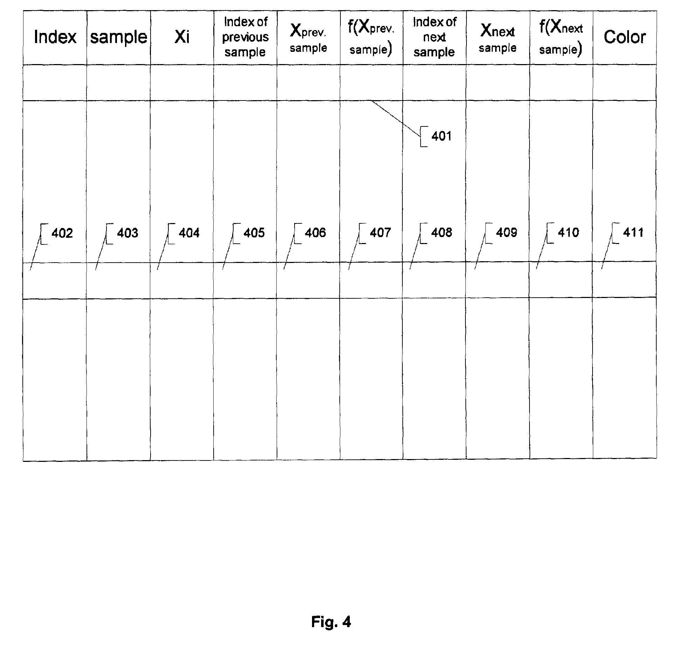

The decision to perform a persistent fill-by-sample operation on a given range of cells belongs to the spreadsheet user. When this operation occurs, a common repository, called the *"Persistent Fill-by-sample Table"* (PFBST for short), is used to record the data required by this operation. This Persistent Fill-by-sample Table is preferably saved on a non volatile memory (typically but not necessary as part of the spreadsheet disk file on the mass storage **107)** Referring now to FIG. **4,** the Persistent Fill-by-sample Table **400** corresponds to a logical simple structure made of several records **401,** each of them associated to a row of a PSROC, so that the Fill-by-sample table 400 has as many rows as the PSROC. Each record includes the following fields:

- The *"Index"* field **402** is used for identifying uniquely the record **401.** The *"Index"* field **402** of the top record **401** is alsways set to the value 1, and the *"Index"* field **402** of any other record **401** have a value equal to the one of the *"Index"* field **402** of the previous record **401,** incremented by 1. In the description of the following fields, it is assumed that the value taken by the *"Index"* field **402** is represented by the variable " i ".
- The *"Sample"* field **403** is used for identifying if the i-th cell in the rightmost column of the PSROC contains or not a sample. If it is the case, then the value taken by the *"Sample"* field **403** is equal to 1, otherwise to 0.
- The *" Xi "* field **404** contains the value of the i-th variable $x_i$. In the case of a PSROC with two columns, the leftmost column contains the sequence of these $x_i$ variables, so that the *"Xi "* field **404** is equal to the value taken by the i-th cell of the leftmost column of the PSROC. When the PSROC only contains a single column, then $x_i$ defaults to the value i, so that the *" Xi "* field **404** is equal to the *"Index"* field **402.**
- The *"Index of previous sample"* field **405** contains the value of the *"Index"* field **402** of the same record **401** within the Persistent Fill-by-sample table **400** if this same record **401** contains a *"Sample"* field **403** set to the value 1. Otherwise the *"Index of previous sample"* field **405** contains the value of the *"Index"* field **402** of the first previous record **401** within the Persistent Fill-by-sample table **400** containing a *"Sample"* field **403** set to the value 1. If there is no previous record **401** containing a *"Sample"* field **403** set to the value 1, then the *"Index of previous sample "* field **405** defaults to the value 0.
- The "*Xprev. sample"* field **406** contains the value of the *"X i "* field **404** of the same record **401** within the Persistent Fill-by-sample table **400** if this same record **401** contains a *"Sample"* field **403** set to the value 1. Otherwise the

*"Xprev. sample"* field **406** contains the value of the *"X i "* field **404** of the first previous record **401** within the Persistent Fill-by-sample table **400** containing a *"Sample"* field **403** set to the value 1. If there is no previous record **401** containing a *"Sample"* field **403** set to the value 1, then the "*Xprev. sample* " field **406** defaults to the value 0.

- The "*f(Xprev. sample)"* field **407** contains the value of the i-th cell in the rightmost column of the PSROC, if the *"Sample"* field **403** within the same record **401** is set to the value 1. Otherwise the *"f(Xprev. sample)"* field **407** contains the value of the *"f(Xprev. sample)"* field **407** of the first previous record **401** within the Persistent Fill-by-sample table **400** containing a *"Sample"* field **403** set to the value 1. If there is no previous record **401** containing a *"Sample"* field **403** set to the value 1, then the *"f(Xprev. sample)"* field **407** defaults to the value 0.

- The *"Index of next sample"* field **408** contains the value of the *"Index"* field **402** of the same record **401** within the Persistent Fill-by-sample table **400** if this same record **401** contains a *"Sample"* field **403** set to the value 1. Otherwise the *"Index of next sample"* field **408** contains the value of the *"Index"* field **402** of the first following record **401** within the Persistent Fill-by-sample table **400** containing a *"Sample"* field **403** set to the value 1. If there is no following record **401** containing a *"Sample"* field **403** set to the value 1, then the *"Index of next sample"* field **408** defaults to the value N+1, if N represents the numer of rows in PSROC.

- The *"Xnext sample"* field **409** contains the value of the *"X i "* field **404** of the same record **401** within the Persistent Fill-by-sample table **400** if this same record **401** contains a *"Sample"* field **403** set to the value 1. Otherwise the *"Xnext sample"* field **409** contains the value of the *"X i "* field **404** of the first following record **401** within the Persistent Fill-by-sample table **400** containing a *"Sample"* field **403** set to the value 1. If there is no following record **401** containing a *"Sample"* field **403** set to the value 1, then the *"Xnext sample "* field **409** defaults to the value 0.

- The *"f(Xnext sample)"* field **410** contains the value of the i-th cell in the rightmost column of the PSROC, if the *"Sample"* field **403** within the same record **401** is set to the value 1. Otherwise the *"f(Xnext sample)"* field **410** contains the value of the *"f(Xnext sample)"* field **410** of the first following record **401** within the Persistent Fill-by-sample table **400** containing a *"Sample"* field **403** set to the value 1. If there is no following record **401** containing a *"Sample"* field **403** set to the value 1, then the *"f(Xnext sample)"* field **410** defaults to the value 0.

- The *"Colour"* field **411** contains the value of the background colour attribute of the i-th cell in the rightmost column of the PSROC, before the corresponding range of cells has been turned into a PSROC.

In the preferred embodiment, the Persistent Fill-by-sample Table **400** is explicitly included within the spreadsheet file itself, but other obvious implementations can be used instead.

## F. Methods

### F.1 Fill-by-sample Method

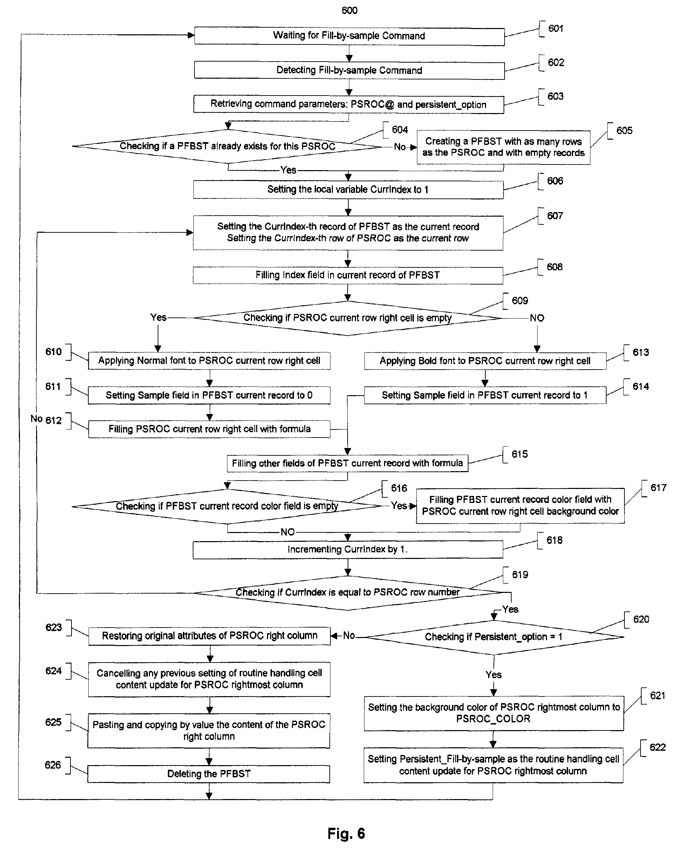

The method for filling by sample a given range of cells to take advantage of the present invention is summarised in flowchart **600** of FIG **6**. This method can be seen as the processing of the ***"Fill-by-sample"*** command. The method comprises the following steps :

- At step **601,** the method is in its default state, waiting for an event to initiate the process.
- At step **602,** an event is detected, as a result of a user action. This action can be for instance a specific combination of key on the keyboard **104,** or the click of the pointing device **105** on a specific button, or any other similar means not further specified here.
- At step **603,** the address of the selected range and the option specifying if the operation must or not be persistent, both considered as parameters of the ***Fill-by-sample*** command, are retrieved under the respective names PSROC@ and persistent_option.
- At step **604,** the method checks if any Persistent Fill-by-sample Table **400** (PFBST) is already defined and associated to the same PSROC. This may have already happened as part of a previous execution of the same ***Fill-by-sample*** command. If such a PFBST **400** is already associated to the same PSROC, then control is given to step **606.** Otherwise control is given to step **605.**
- At step **605**, the method creates a new PFBST **400** associated to the PSROC identified by PSROC@. This new table contains as many rows as the PSROC and is initialized with empty records **401.**
- At step **606,** the method initializes a local variable CurrIndex to the value 1.
- At step **607,** the current record **401** of the PFBST **400** is set equal to the CurrIndex-th record, and the current row of the PSROC is set equal to the CurrIndex-th row within the PSROC.
- At step **608,** the *"Index"* field **402** of the current record **401** of the PFBST **400** is set equal to CurrIndex.
- At step **609,** the method checks if the rightmost cell within the current row of the PSROC is empty. If it is the case, then control is given to step **610.** Otherwise control is given to step **613.**
- At step **610,** the method applies normal font to the rightmost cell within the current row of the PSROC.

- At step **611,** the *"Sample"* field **403** of the current record **401** of the PFBST **400** is set equal to 0. This value indicates that the corresponding row in the PSROC does not contain a sample.
- At step **612,** the rightmost cell within the current row of the PSROC is filled with a formula which formaly translates how a sampled value is extrapolated from sample values. In a preferred embodiment of the present invention, this formula takes the following form, using conventional spreadsheet formula language:
  @if $(X_{prev.} = X_{next}$ ; $(f(X_{prev.}) + f(X_{next}))/2$; $f(X_{prev.}) + (X_i - X_{prev.})*(f(X_{prev.}) - f(X_{next}))/(X_{prev.} - X_{next}))$ where $X_{prev.}$, $X_{next}$, $f(X_{prev.})$, $f(X_{next})$, and $X_i$ respectively correspond to the fields *"Xprev. Sample"* **406,** *"Xnext sample"* **409,** *"f(Xprev. Sample)"* **407,** *"f(Xnext sample)"* **410,** and *"X i "* **404** within the same record **401.** Then control is given to step **615.**
- At step **613,** the method applies bold font to the rightmost cell within the current row of the PSROC.
- At step **614,** the *"Sample"* field **403** of the current record **401** of the PFBST **400** is set equal to 1. This value indicates that the corresponding row in the PSROC does contain a sample.
- At step **615,** the fields *"X i "* **404,** *"Index of previous sample"* **405,** *"Xprev. Sample"* **406,** *"f(Xprev. Sample) "* **407,** *"Index of next sample"* field **408,** *"Xnext sample"* **409,** and *"f(Xnext sample)"* **410,** all within the same record **401** of the PFBST **400** are filled with relevant formulas translating the above described relationships between these fields and the PSROC elements. In a preferred embodiment of the present invention, these formulas respectively take the following forms, using conventional spreadsheet formula language: @IF(@COLS(PSROC)=2; left_of_PSROC; index), @IF(sample=1; index; prev_index$_{prev}$), @IF(index$_{next}$=@ROWS (PSROC)+1; $X_i$ ; @IF (sample=1; $X_i$ ; prev_$X_{prev.}$)), @IF(sample=1; right_of_PSROC; prev_f($X_{prev.}$)), @IF(sample=1; index; next_index$_{next}$), @IF(index$_{prev.}$=0; $X_i$ ; @IF(sample=1; $X_i$ ; next_$X_{next}$)), @IF(sample=1; right_of_PSROC; next_f $(X_{next})$)), where index, sample, index$_{prev.}$, index$_{next}$, and $X_i$ respectively correspond to the fields *"Index"* **402,** *"sample"* **403,** *"index of previous sample"* **405,** *"index of next sample"* **408,** and *"X i "* **404** within the same record **401,** where prev_index$_{prev.}$, prev_$X_{prev.}$ and prev_f($X_{prev.}$)) respectively correspond to the fields *"index of previous sample"* **405,** *"Xprev. Sample"* **406** and *"f(Xprev. Sample)"* **407** within the record **401** which precedes the current one, where next_index$_{next}$, next_$X_{next}$, and next_f($X_{next}$) respectively correspond to the fields *"index of next sample"* **408,** *"Xnext Sample"* **409** and *"f(Xnext Sample)"* **410** within the record **401** which follows the current one, and where left_of_PSROC and right_of_PSROC correspond to the leftmost and rightmost cells of the current row of the PSROC.
- At step **616,** the method checks if the *"Colour"* field **411** of the current record **401** of the PFBST **400** is empty. If it is the case, then control is given to step **617.** Otherwise control is given to step **618.**
- At step **617,** the *"Colour"* field **411** of the current record **401** of the PFBST **400** is filled with the value of the background colour of the rightmost cell of the current record of the PSROC.
- At step **618,** the local variable CurrIndex is incremented by 1.
- At step **619,** the method checks if the value of the local variable CurrIndex is equal or not to the number of rows of the PSROC. If it is the case, then control is given to step **720.** Otherwise control is given to step **607** for looping on the current record **401** of the PFBST **400.**
- At step **620,** the method checks if the *"Persistent_option"* parameter is found equal to 1. If it is the case, then control is given to step **623.** Otherwise control is given to step **621.**
- At step **621,** the background colour of the entire rightmost column of the PSROC is changed to the PSROC_COLOUR.
- At step **622,** the ***Persistent_Fill-by-sample*** command is set as the handling routine of the event corresponding to the content change of any cell within the rightmost column of the PSROC. This means that any future modification of the content of any cell within the rightmost column of the PSROC will trigger execution of the ***Persistent_Fill-by-sample*** command. Control is then given to the initial step **601** for handling any future invocation of the ***Fill-by-sample*** command.
- At step **623,** the original attributes of the cells within the rightmost column of the PSROC are restored. The value of the background colour of the i-th cell can be found in the *"Colour"* field **411** of the i-th record **401** of the PFBST **400,** whereas the used font is set to normal, whether it was originally to normal or not.
- At step **624,** the ***Persistent_Fill-by-sample*** command is disabled as the handling routine of the event corresponding to the content change of any cell within the rightmost column of the PSROC.
- At step **625,** the content of the rightmost column of the PSROC is copy-pasted by value onto itself so that the formula set at step **612** be replaced by the value it takes.
- At step **626,** the PFBST is deleted. Control is then given to the initial step **601** for handling any future invocation of the ***Fill-by-sample*** command.

**F.2. Persistent_Fill-by-sample method**

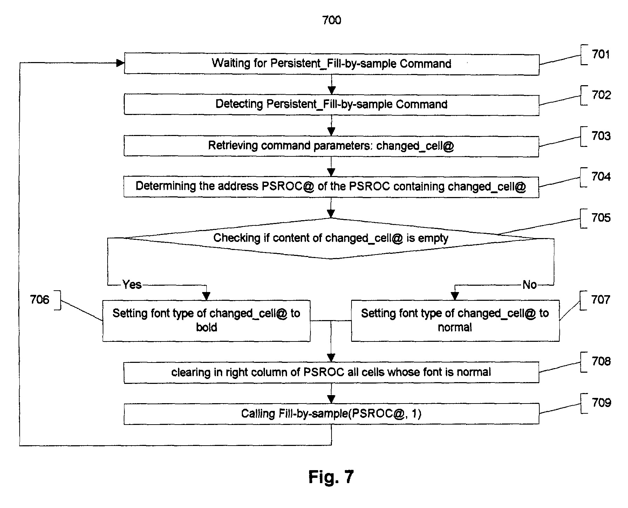

The method for automatically reacting upon a PSROC right column content change to take advantage of the present invention is summarised in flowchart **700** of FIG **7.** This method can be seen as the processing of the

*"Persistent_Fill-by-sample"* command. The method comprises the following steps :

- At step **701,** the method is in its default state, waiting for an event to initiate the process.
- At step **702,** an event is detected, triggering the command execution to start. This event is typically the change of the content of any cell within the rightmost column of the PSROC.
- At step **703,** the address of the cell whose content has changed, considered as a parameter of the ***Persistent_Fill-by-sample*** command, is retrieved under the name *changed_cell@.*
- At step **704,** the address of the PSROC containing the cell with address *changed_cell@* is determined. This address is referred to as *"PSROC@"*. As a given cell cannot belong to multiple PSROC, and as the invocation of the ***Persistent_Fill-by-sample*** command indirectly reflects that the changed cell belongs to a PSROC, there always exists a single PSROC containing the changed cell.
- At step **705,** the method checks if the cell with address *changed_cell@* is empty. If it is the case, then it typically means that the spreadsheet user has cleared a previously existing sample; in this situation control is given to step **706.** If it is not the case, then it typically means that the spreadsheet user has either modified the value of a previously existing sample, or a introduced a new sample; in this situation control is given to step **707.**
- At step **706,** the font type of the cell with address *changed_cell@* is set to bold. Control is then given to step **708.**
- At step **707,** the font type of the cell with address *changed_cell@* is set to normal.
- At step **708,** every cell within the rightmost column of the PSROC with address *PSROC@* is cleared (content emptied) if and only if the font type of this cell is found equal to normal.
- At step **709,** the command Fill-by-sample is invoked, the passed argument being respectively PSROC@ and 1 (for the persistent_option parameter). Then control is given to the initial step 701 for treating any future invocation of the command Persistent_Fill-by-sample command.

## ALTERNATE EMBODIMENTS

While the invention has been particularly shown and described with reference to a preferred embodiment, it will be understood that various changes in form and detail may be made therein without departing from the spirit, and scope of the invention.

The Persistent Fill-by-sample method and system according to the present invention may be used advantageously in those environments where elements of information are organised as multidimensional tables having more than three dimensions.

The linear segment based interpolation method used in the preferred embodiment of the present invention may be replaced by other interpolation techniques ensuring that the underlying reference function $y = f(x)$ crosses the sample points. Such techniques may rely on more than two neighbouring samples.

## Claims

1. Method for filing empty cells of a range of cells on the base of sample values contained in a sub set of said range of cells, in a multi dimensional spreadsheet comprising a plurality of cells identified by a cell address along each dimension, a range of cells comprising one or a plurality of cells, said method comprising the steps of:

- selecting a range of cells, said range of cells comprising a plurality of cells, said plurality of cells comprising a plurality of sample cells and one or a plurality of empty cells, a sample cell containing a sample value, an empty cell containing no value or a value not considered as a sample value; the content $y_i$ of each sample cell and each empty cell being associated with a particular value $x_i$ of a variable x;
- activating a fill-by-sample operation, said fill-by-sample operation comprising the step of:

   - ordering the sample cells and the empty cells according to the values $x_i$ associated with the content of said cells;

   and for each empty cell, the steps of:

   - identifying the value $x_i$ associated with the content of the empty cell;
   - selecting one or a plurality of previous sample cells;
   - selecting one or a plurality of next sample cells;
   - computing the value $y_i$ of the empty cell according to the values $y_{previous}$ contained in the selected one or plurality of previous sample cells, and the values $y_{next}$ contained in the selected one or plurality of next sample cells;
- filing the empty cell with said computed value $y_i$.

2. The method according to the preceding claim wherein said step of computing the value $y_i$ of each empty cell according to the values $y_{previous}$ contained in the selected one or plurality of previous sample cells, and the values $y_{next}$ contained in the selected one or plurality of next sample cells, comprises the further step of:

- computing the value of the empty cell according to the values $x_{previous}$ associated with the content $y_{previous}$ of the selected one or plurality of previous sample cells, and the values $x_{next}$ associated with the content $y_{next}$ of the selected one or plurality of next sample cells.

3. The method according to anyone of the preceding claims comprising the further steps of:

- automatically activating the fill-by-sample operation when one or a plurality of sample cells are transformed in one or a plurality of empty cells.

4. The method according to anyone of the preceding claims comprising the further steps of:

- automatically activating the fill-by-sample operation when one or a plurality of empty cells is transformed in one or a plurality of sample cells.

5. The method according to anyone of the preceding claims comprising the further step of:

- automatically activating the fill-by-sample operation when the content of one or a plurality of sample cells is changed.

6. The method according to anyone of the preceding claims comprising the further step of:

- automatically activating the fill-by-sample operation when one or a plurality of sample cells or one or a plurality of empty cells are added.

7. The method according to anyone of the preceding claims comprising the further step of:

- automatically activating the fill-by-sample operation when one or a plurality of sample cells or one or a plurality of empty cells are deleted.

8. The method according to any one of the preceding claims wherein the selected range of cells further comprises variable cells, a variable cell containing a value $x_i$ associated with the content $y_i$ of a particular sample cell or a particular empty cell.

9. The method according to any one of the preceding claims wherein the step of computing the value $y_i$ of the empty cell comprises the step of:

- computing the value $y_i$ as equal to:

$$y_i = y_{previous} + (x_i - x_{previous}) * ((y_{next} - y_{previous}) / (x_{next} - x_{previous}))$$

where :

- $y_{previous}$ is the content of the previous sample cell;
- $x_{previous}$ is the value of the variable x associated with the content of the previous sample cell;
- $y_{next}$ is the content of the next sample cell;
- $x_{next}$ is the value of the variable x associated with the content of the next sample cell;
- $x_i$ is the value of the variable x associated with the empty cell.

10. The method according to any one of the preceding claims wherein the step of activating a fill-by-sample operation comprises the further step of:

- defining a table and associating said table with the selected range of cells, said table comprising for each empty cell i:

  - an "index field" for identifying said empty cell;
  - a "sample field" for indicating that said cell is an empty cell;
  - a "$X_i$ field" with the value $x_i$ associated with said empty cell;
  - an "index of previous sample field" with the value of the "index field" of the previous record with a sample value;
  - a "Xprev. sample field" with the value of the "$X_i$ field" of the previous record with a sample value;
  - a "f (Xprev. sample) field" with the value $y_{previous}$ of the cell corresponding to the previous record with a sample value;
  - an "index of next sample field" with the value of the "index field" of the next record with a sample value;
  - a "Xnext sample field" with the value of the "$X_i$ field" of the next record with a sample value;
  - a "f(Xnext sample) field" the value $y_{next}$ of the cell corresponding to the next record with a sample value;

11. The method according to any one of the preceding claims wherein said table further comprises for each sample cell i:

  - an "index field" for identifying said sample cell;
  - a "sample field" for indicating that said cell is a sample cell;
  - a "$X_i$ field" with the value $x_i$ associated with said sample cell;
  - the "index of previous sample field" with the value of the "index field" of said sample cell;
  - a "Xprev. sample field" with the value of the "$X_i$ field" of said sample cell;
  - the "f(Xprev. sample) field" with the value $y_i$ of said sample cell;
  - the "index of next sample field" with the value of the "index field" of said sample cell;
  - the "Xnext sample field" with the value of the "$X_i$ field" of said sample cell;
  - the "f(Xnext sample) field" with the value $y_i$ of said sample cell.

12. The method according to any one of the preceding claims wherein said selected range of cells comprises :

  - a single column or single row range of cells, said range of cells comprising N cells, wherein the i-th cell in the column or row comprises a value $y_i = f(i)$, or
  - a double column or double row range of cells, said range of cells comprising 2N cells, wherein the i-th cell in a first column or first row comprises a value $x_i$ and the second column or second row comprises a value $y_i = f(x_i)$.

13. The method according to any one of the preceding claims wherein said table comprises N records, as many records as rows in a single or double column range of cells or as many records as columns in a single or double row range of cells.

14. A system comprising means adapted for carrying out the method according to any one of the preceding claims.

15. A computer program comprising instructions adapted for carrying out the method according to anyone of claims 1 to 13 when said computer program is executed on a computer.

**FIG 1A**

EP 1 209 607 A2

150

USER

153

Interface

152

Application Software

151

Operating System

FIG 1B

160

**FIG.1C**

| | A | B | C | D | E | F | G | H |
|---|---|---|---|---|---|---|---|---|
| 1 | | | | | | | | |
| 2 | | Jan | Fev | Mar | Apr | May | Jun | Total |
| 3 | Europe | 100 | 110 | 150 | 140 | 150 | 160 | 810 |
| 4 | Asia | 45 | 40 | 60 | 60 | 65 | 70 | 340 |
| 5 | Americas | 145 | 145 | 185 | 175 | 200 | 190 | 1040 |
| 6 | Total | 290 | 295 | 395 | 375 | 415 | 420 | 2190 |

200

**FIG. 2A**

**FIG. 2B**

221 222 223 224 225 226 227 228 229

263a

262a

261a

_260a_

**FIG. 2C**

Contents | Summary | Jan | Fev | Mar | Apr | May | Jun | Jul | Aug | Sep | Oct

263a

262a

261a

_260b_

**FIG. 2D**

EP 1 209 607 A2

FIG 3A

Y = F( X )

FIG 3B

Y = F( X )

FIG 3C

Y = F( X )

FIG 3D

Y = F( X )

19

| Index | sample | Xi | Index of previous sample | $X_{prev.}$ sample | $f(X_{prev.}$ sample$)$ | Index of next sample | $X_{next}$ sample | $f(X_{next}$ sample$)$ | Color |
|---|---|---|---|---|---|---|---|---|---|
| | | | | | | | | | |
| | | | | | | 401 | | | |
| 402 | 403 | 404 | 405 | 406 | 407 | 408 | 409 | 410 | 411 |
| | | | | | | | | | |
| | | | | | | | | | |

**Fig. 4**

**Fig. 5A**

500

501 — Range properties... Alt+Enter

Insert... Ctrl+
Delete... Ctrl-

Name...
Version
Fill...
Sort...

Analyze
Cell Comment...

Transpose...
Parse...
Fast Format

**Fig. 5B**

510

512

513

Fill using:

Numbers
Dates
Time
Fill by example

511

OK

Cancel

Help

514

Persistent

Range: A:C8..A:F13

600

601 Waiting for Fill-by-sample Command

602 Detecting Fill-by-sample Command

603 Retrieving command parameters: PSROC@ and persistent_option

604 Checking if a PFBST already exists for this PSROC — No → 605 Creating a PFBST with as many rows as the PSROC and with empty records

Yes

606 Setting the local variable CurrIndex to 1

607 Setting the CurrIndex-th record of PFBST as the current record
Setting the CurrIndex-th row of PSROC as the current row

608 Filling Index field in current record of PFBST

609 Checking if PSROC current row right cell is empty
Yes ← / → NO

610 Applying Normal font to PSROC current row right cell | 613 Applying Bold font to PSROC current row right cell

611 Setting Sample field in PFBST current record to 0 | 614 Setting Sample field in PFBST current record to 1

No 612 Filling PSROC current row right cell with formula

615 Filling other fields of PFBST current record with formula

616 Checking if PFBST current record color field is empty — Yes → 617 Filling PFBST current record color field with PSROC current row right cell background color

NO

618 Incrementing CurrIndex by 1.

619 Checking if CurrIndex is equal to PSROC row number

Yes

620 Checking if Persistent_option = 1

623 Restoring original attributes of PSROC right column ← No

624 Cancelling any previous setting of routine handling cell content update for PSROC rightmost column

625 Pasting and copying by value the content of the PSROC right column

626 Deleting the PFBST

Yes

621 Setting the background color of PSROC rightmost column to PSROC_COLOR

622 Setting Persistent_Fill-by-sample as the routine handling cell content update for PSROC rightmost column

**Fig. 6**

700

Waiting for Persistent_Fill-by-sample Command — 701

Detecting Persistent_Fill-by-sample Command — 702

Retrieving command parameters: changed_cell@ — 703

Determining the address PSROC@ of the PSROC containing changed_cell@ — 704

Checking if content of changed_cell@ is empty — 705

Yes

No

706 — Setting font type of changed_cell@ to bold

Setting font type of changed_cell@ to normal — 707

clearing in right column of PSROC all cells whose font is normal — 708

Calling Fill-by-sample(PSROC@, 1) — 709

**Fig. 7**